# EUROPEAN PATENT SPECIFICATION

(11) **EP 3 564 966 B1**
(45) Date of publication and mention of the grant of the patent: **14.02.2024**
(21) Application number: 16904249.6
(22) Date of filing: 29.12.2016
(51) Int. Cl.: G21C 3/344, G21C 3/34

(54) **NUCLEAR REACTOR FUEL ASSEMBLY**
KERNBRENNSTABBÜNDEL
ASSEMBLAGE DE COMBUSTIBLE D'UN RÉACTEUR NUCLÉAIRE

(43) Date of publication of application: 06.11.2019
(73) Proprietor: Joint-Stock Company "TVEL", Moscow 115409 (RU)
(72) Inventor: ENIN, Anatoly Alekseevich, Novosibirsk 630110 (RU); SHUSTOV, Mstislav Aleksandrovich, Novosibirsk 630017 (RU); IVANOV, Roman Sergeevich, Novosibirsk 630110 (RU); DOROKHOV, Roman Aleksandrovich, Novosibirsk 630098 (RU); MALCHEVSKIY, Dmitry Vyacheslavovich, Podolsk 142100 (RU); VOLKOV, Sergey Evgenievich, Moscow 129075 (RU); VASILCHENKO, Ivan Nikitovich, Podolsk 142102 (RU); VYALITSYN, Viktor Vasil'evich, Podolsk 142115 (RU); KUSHMANOV, Sergey Aleksandrovich, Podolsk 142108 (RU)
(74) Representative: Friese Goeden Patentanwälte PartGmbB
(86) International application number: PCT/RU2016/000948
(87) International publication number: WO 2018/124917

(56) References cited:
- RU-C1- 2 273 062
- RU-C1- 2 391 725
- RU-C1- 2 428 756
- RU-C1- 2 518 058
- US-A1- 2016 163 402

## Description

The invention relates to the field of nuclear power engineering, namely, to design of the nuclear reactors' fuel assemblies, and is aimed at assurance of effective mixing of the coolant in order to enhance heat removal from the fuel elements.

The modern industry-related tasks to increase power generation at VVER-type NPPs and to increase fuel utilization efficiency at NPPs require implementation of enhanced fuel cycles. The simplest and most efficient way to increase power generation of the operated generating units of NPPs is to increase their established power and to extend the fuel columns operation duration - just what is being implemented now at generating units with VVER. Accomplishment of these objects is accompanied by severization of fuel assemblies' operating conditions (increase of power, increase of power generation ripples, extension of operation duration). With this, the requirements for reliable and safe operation become more severe.

Power generation along a nuclear reactor's fuel assembly cross-section has substantial ripples. This results in spotty distribution of the coolant parameters, gain in vapour content and, correspondingly, reduction of critical power ratio, especially in the internal rows of fuel elements in a fuel assembly.

Analysis of methods to increase the critical power ratio for VVER by papers of Russian and foreign specialists shows that utilization of enhancers in the design of a fuel assembly allows, with selection of optimum design and mutual position of enhancers and spacer grids, to ensure 30-40% increase of critical power ratio, which is 10-15% of a reactor thermal power. Thus, based upon the necessity to ensure the thermal and physical reliability of fuel assemblies under conditions of operation at increased yield of fuel assemblies and reactor, the object to enhance heat transfer in fuel assemblies through implementation of the new structural members, enhancers (mixing lattices), becomes particularly important.

There is known the nuclear reactor's fuel assembly comprising the device for enhancement of the coolant heat transfer along the fuel assembly cross-section (see USA patent No.3.862.000, claimed on 31/08/1972. IPC G21C 3/34), representing the lattice made of intersecting plates forming at intersection the cells fitted with deflectors (deflecting elements). The deflectors are located concentrically to place of convergence of adjoining angles of neighbouring fuel assemblies and oriented outwards in such a way that to deflect transversely inside each assembly a part of the coolant longitudinal flow.

Disadvantage of such a design of the fuel assembly is the coolant flow fluctuation due to action of the circulation pump, which is transmitted to the device for enhancement of the coolant heat transfer. In certain cases, this can result both in the device components bend aside and separation. Besides, the lattice of such design is complicated from the point of view of manufacturing.

By the engineering substance and achievable result, the closest to the engineering solution being proposed is the nuclear reactor's fuel assembly having cross-section of regular hexagon shape comprising the upper and the lower roots, the guiding channels, the fuel elements located in the nodes of triangular lattice, and at least one lattice consisting of inseparably interconnected cells made in the form of a tube the longitudinal axis of which coincides with the fuel element longitudinal axis (see the RF patent No.2273062, published on 27/03/2006, Bulletin No.9) - the prototype.

Disadvantage of this design of a fuel assembly is impossibility of operation at increased operating mode of a reactor facility - within 107-110% of rated power, due to impossibility to ensure safety of the nuclear fuel operation.

The technical object the claimed device is aimed to resolve is increase of the fuel assembly reliability, of nuclear reactor safety, and enhancement of mixing properties.

The technical effect to be achieved by utilization of the claimed device is enhancement of the coolant heat transfer in a fuel assembly by means of creation of vortex structures in the coolant jets.

The said technical effect is achieved by the fact that in the current nuclear reactor's fuel assembly having the cross section of regular hexagon shape comprising the upper and the lower roots, the guiding channels, the fuel elements located in nodes of triangular lattice, and at least one lattice consisting of inseparably interconnected cells made in the form of a tube, the longitudinal axis of which coincides with the fuel element longitudinal axis, according to the invention, the lattice cells are made in the form of shaped tube and have the cross section of hexagon shape the facets of which consist of the middle and two extreme portions. At least, near the butts of the cells from the upper root side, the facets extreme portions have sagging monotonously changing by magnitude along the cell longitudinal axis. The neighbouring facets of a cell have the extreme portions bordering on the common vertex of hexagon with the sagging direction opposite about the cell centre. The contacting facets of adjoining cells have the directions of sagging opposite about the centres of own cells. The object is also resolved by the fact that there is no gap between the lattice cells.

The said totality of features allows resolving of the set object. When the fuel assembly with triangular placement of fuel elements is operated in a reactor, the proposed selection of geometry of mixing lattice cells facets comprising the middle and two extreme portions ensures circular translation motion of the coolant passing through the said cell in between the cells facets and the fuel elements installed into the cells, with formation of vortex. In the coolant two-phase flow comprising water and vapour, due to centrifugal forces of formed vortex the heavy particles of the flow (water) are thrown back to neighbouring fuel elements and destruct the vapour film on their surface, and the light particles (vapour) remain in the vortex centre, and this results in increase of heat transfer enhancement.

Making of sagging on the extreme portions, at least near the cells butts from the upper root side, which changes monotonously by magnitude along the cell longitudinal axis, allows increase of the lattice action upon the coolant flow.

Opposition of direction of sagging about the centres of own cells of contacting facets of adjoining cells and of sagging of extreme portions of neighbouring facets bordering on the common vertex of hexagon, ensures creation of vortexes in such a way that the total vortex moment acting upon the fuel assembly equals zero.

Absence of gap between the lattice cells allows minimizing of the lattice drag coefficient, enlarging of the created vortexes range zone.

The result is that the maximum total effect of heat transfer enhancement in the fuel assembly in the coolant two-phase flow is achieved.

RU 2 124 239 C1 discloses a lattice cell of a nuclear reactor fuel assembly. The lattice cell is made in the form of a tube having a longitudinal axis that coincides with the longitudinal axis of one of the fuel elements. The cross section of the lattice cell can be considered to have a hexagonal shape comprising concave and convex portions.

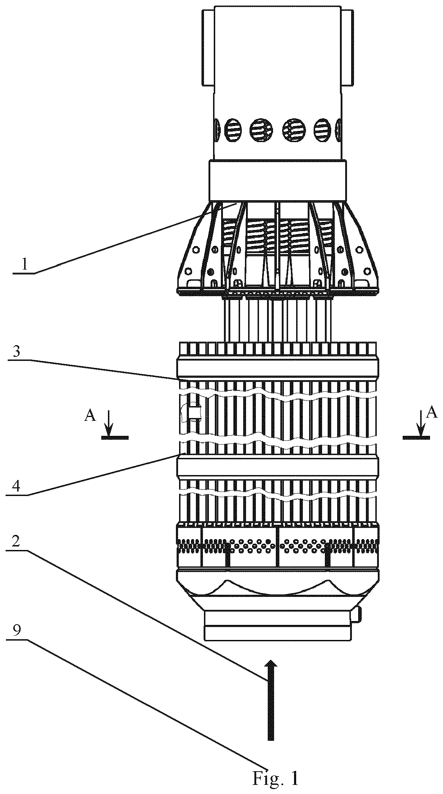

Fig. 1 shows the nuclear reactor's fuel assembly, general arrangement.

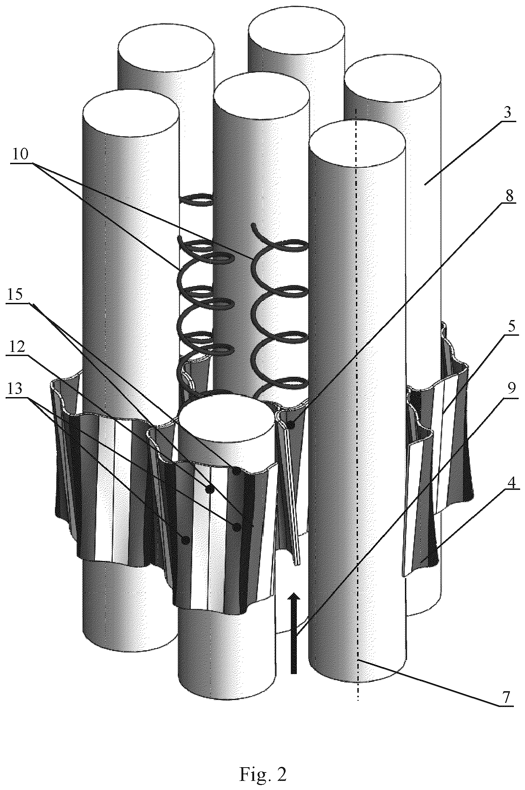

Fig. 2 shows the operating principle of the fuel assembly design (fragment).

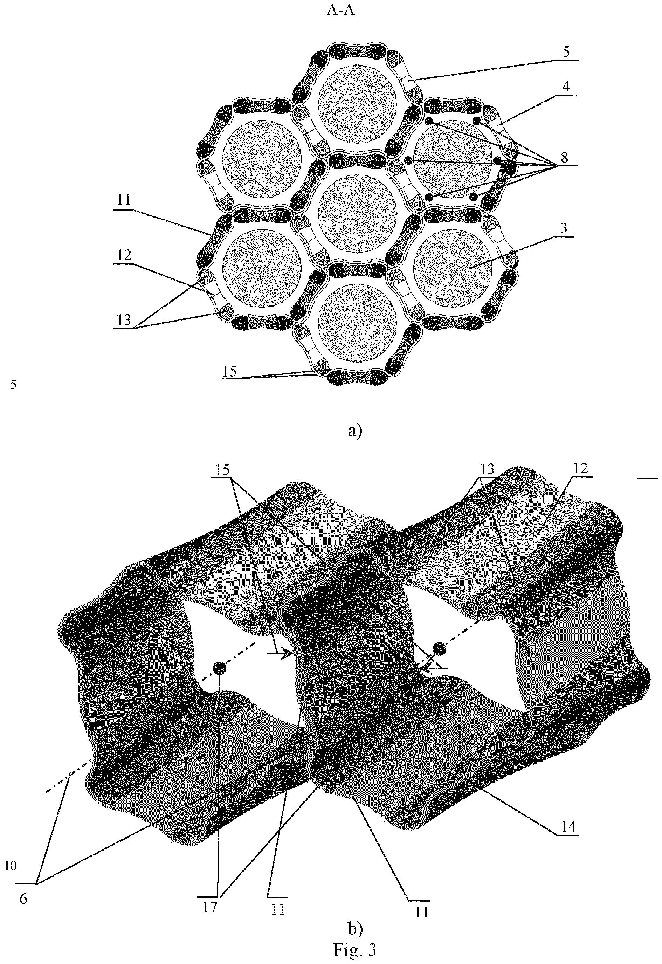

Fig. 3 shows the mixing lattice:
   a) cross-section A-A above the mixing lattice (fragment);
   b) isometric view (fragment).

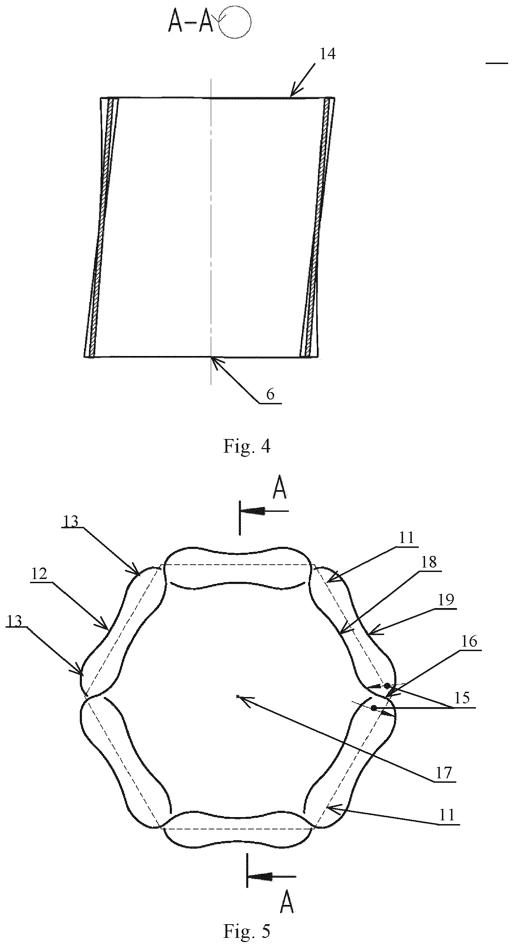

Fig. 4 shows the cell (embodiment), the cross-section.
Fig. 5 shows the cell (embodiment), the front view.

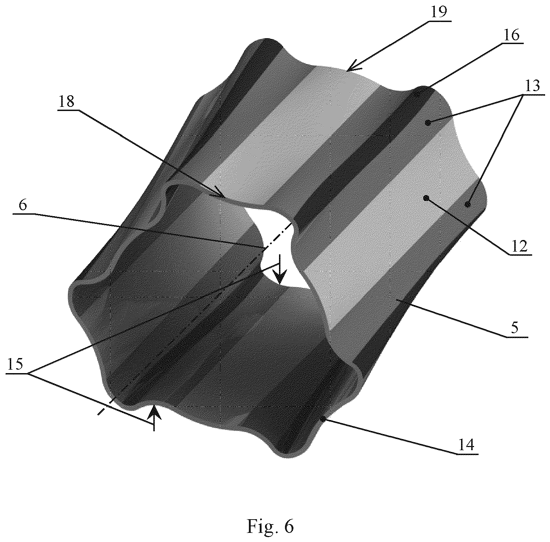

Fig. 6 shows the cell isometric view.

The nuclear reactor's fuel assembly comprises upper 1 and lower 2 roots, guiding channels (not shown), fuel elements 3 located in nodes of the triangular grid, at least one mixing lattice 4 consisting of inseparably interconnected cells 5 made in the form of multifaceted tube longitudinal axis 6 of which coincides with longitudinal axis 7 of fuel element 3. Between fuel elements 3 and cells 5 of the lattice, there are generated inclined channels 8 for passage of coolant 9 forming vortex 10 due to the cell geometry. Flow of coolant 9 passes from upper to lower root of the fuel assembly.

Cells 5 of lattice 4 have cross section of hexagon shape the facets 11 of which consist of middle 12 and two extreme 13 portions. At least near butts 14 of cells 5 from the side of upper root, extreme facets 13 of facets 11 are made with sagging 15 monotonously changing by magnitude along longitudinal axis 6 of cell 5.

Neighbouring facets 11 of cell 5 have extreme portions 13 bordering on common vertex 16 of hexagon with opposite about centre 17 of cell 5 direction of sagging 15, contacting facets 11 of adjoining cells 5 have sagging 15 in opposite directions about centres 17 of own cells 5. The object is also resolved by the fact that there is no gap between the lattice cells 5.

To increase inclination, the wall of cell 5 has on one side concave portion 18, and on another side of cell 5, convex portion 19 is made on the wall.

As an example, the nuclear reactor's fuel assembly is presented in which the lattice of the proposed design is installed perpendicularly to the fuel assembly longitudinal axis and fixed on longitudinal strain members, e.g. guiding channels. Here, in places where the guiding channels pass through the lattice, the cells can be omitted.

Fuel elements 3 pass through mixing lattice 4 inside cells 5, here inclined channels 8 are formed in between cells 5 and fuel elements 3. During the fuel assembly operation in a reactor, coolant 9 enters the fuel assembly and heats up due to energy release of fuel elements 3. Coolant 9, while passing through cells 5 and inclined channels 8, gets drawn in circular translation motion and forms vortex 10. In the coolant two-phase flow comprising water and vapour, due to centrifugal forces the heavy particles of the flow (water) are thrown back to neighbouring fuel elements 3 and destruct the vapour film on their surface, and the light particles (vapour) remain in the vortex 10 centre, and this results in increase of heat transfer enhancement.

Making of neighbouring facets 11 of cell 5 with extreme portions 13 bordering on common vertex 16 of hexagon and having opposite about centre 17 of cell 5 direction of sagging 15, and of contacting facets 11 of adjoining cells 5 with direction of sagging 15 opposite about centres 17 of own cells 5, ensures avoidance of torque to be transmitted to the fuel assembly from the lattice since the resulting adjoining vortexes have opposite direction of rotation.

Making of concave portion 18 on one side of cell 5 wall and of convex portion 19 on another side of cell 5 wall ensures optimum values of cell facets inclination in the context of deflection of coolant 9 flow and vortex 10 formation.

The gap-free installation of cells 5 in mixing lattice 4 ensures minimization of drag coefficient.

This invention is industrially applicable and can be used in manufacturing of fuel assemblies of nuclear power reactors possessing the improved safety due to reduction of non-uniformity of the coolant parameters in the fuel assembly and in the active zone, with possibility to increase the reactor power due to increase of margin of the coolant critical parameters.

## Claims

1. A nuclear reactor's fuel assembly comprising
an upper root (1) and a lower root (2),
guiding channels,
fuel elements (3) located in nodes of a triangular grid, and
at least one lattice (4) consisting of inseparably interconnected lattice cells (5), each lattice cell (5) made in the form of a tube having a longitudinal axis that coincides with the longitudinal axis of one of the fuel elements (3),
wherein the lattice cells (5) have a cross section of hexagonal shape, the facets (11) of the hexagonal shape consisting each of a middle portion (12) and two lateral portions (13),
wherein at least near the butts of the lattice cells (5) that face the upper root (1) the magnitude of the curvature of the facets' lateral portions (13) changes monotonously along the cells' longitudinal axis,
wherein neighbouring facets of each of the cells (5) have their lateral portions (13) bordering on a common vertex of hexagon shape, the bordering extreme portions (13) having opposite direction of curvature with respect to the cell's centre,
contacting facets (11) of adjoining cells (5) having opposite directions of curvature with respect to the centre of the respective cells (5).

2. The nuclear reactor's fuel assembly according to claim 1, wherein no gap exists between the lattice cells (5).

## Patentansprüche

1. Ein Brennelement des Kernreaktors, enthaltend einen Oberstamm (1) und einen Unterstamm (2), Führungskanäle, in den Knoten eines Dreiecksnetzes angeordnetes Brennstoffbündel (3) und mindestens ein Gitter (4), bestehend aus den untrennbar zusammengebundenen Gitterzellen (5), wobei jede Gitterzelle (5) in Form eines Rohres ausgeführt ist, dessen Längsachse mit der Längsachse des Brennstoffbündels (3) zusammenfällt, worin die Gitterzellen (5) einen Querschnitt in Form eines Sechsecks haben, die Flächen (11) des Sechsecks aus einem Mittelteil (12) und zwei Seitenteilen (13) bestehen, während zumindest an den Enden der vor dem Oberstamm (1) stehenden Gitterzellen (5) der Grad der Biegung der Seitenteilen (13) der Flächen sich monoton entlang der Längsachse der Zellen ändert, während benachbarte Flächen jeder der Zellen (5) ihre Seitenteile (13) an den gemeinsamen Scheitelpunkt des Sechsecks angrenzen, die angrenzenden extremen Teile (13) die Biegung haben, die der Mitte der Zelle entgegengerichtet ist, und mit den Flächen (11) benachbarter Zellen (5), deren Biegung der Mitte der entsprechenden Zellen (5) entgegengerichtet sind, in Kontakt stehen.

2. Das Brennelement des Kernreaktors nach Anspruch 1, **dadurch gekennzeichnet, dass** zwischen den Gitterzellen (5) kein Spalt vorhanden ist.

## Revendications

1. Assemblage combustible du réacteur nucléaire qui contient une queue supérieure (1) et une queue inférieure (2), les canaux guides, les unités de combustible (3) placées dans les noeuds du réseau triangulaire et, au moins, une grille (4) qui se compose des mailles (5) réunies entre elles de façon inséparable, chaque maille (5) de la grille est réalisée en forme d'un tube dont l'axe longitudinal coïncide avec l'axe longitudinal de l'unité de combustible, qui se distingue par ce que la section transversale des mailles de la grille a la forme d'un hexagone, les faces (11) de forme hexagonale se composent d'un secteur moyen (12) et de deux secteurs extrêmes (13), et en cela le degré d'affaissement des secteurs extrêmes (13) des faces, au moins, des abouts des mailles (5) de la grille du côté de la queue supérieure (1) change monotonement par sa grandeur le long de l'axe longitudinal des mailles, en cela les faces voisines de chaque maille (5) ont leurs secteurs extrêmes (13) qui aboutissent au sommet commun de l'hexagone, la direction d'affaissement des secteurs extrêmes (13) aboutissants est opposée par rapport au centre de la maille, les directions d'affaissement des faces (11) qui contactent l'une l'autre des mailles (5) adjacentes sont opposées par rapport aux centres des mailles (5) correspondantes.

2. Assemblage combustible selon le point 1 qui se distingue par ce qu'entre les mailles (5) de la grille il n'y a pas d'espace.
